# EUROPEAN PATENT APPLICATION

(11) **EP 3 703 381 A1**
(43) Date of publication of application: **02.09.2020**
(21) Application number: 19305234.7
(22) Date of filing: 28.02.2019
(51) Int. Cl.: H04N 21/422, H04N 21/466, H04N 21/482, G06F 3/023, G06F 16/732, H04N 21/4335

(54) **METHOD AND DEVICE FOR THE SEARCH OF CONTENT BASED ON USER SEARCH HABITS**

(71) Applicant: InterDigital CE Patent Holdings, 75017 Paris (FR)
(72) Inventor: MORIN, Thomas, 35576 Cesson-Sévigné Cedex (FR); JEGOU, Karine, 35576 Cesson-Sévigné (FR); QUERRE, Goulven, 35576 Cesson-Sévigné (FR)
(74) Representative: Amor, Rim

(57) **Abstract**

There is disclosed a method of aiding in the use of an apparatus for retrieving contents using a content delivery application. User search habits are learnt by identifying and storing records (*Rec_i*) each comprising a search text (*TEXT*) in association with an application identifier (*aID*) which identifies the content delivery application used for searching said text, and with a timestamp (TS) which reflects the time when said text has been searched. Then, upon launch of a given content delivery application at a given time of a day, and on condition that a matching record is identified, a search for the search text in the matching record is proposed. A search can thus be performed for the text using the content delivery application.

## Description

### BACKGROUND

### Technical Field

The present disclosure generally relates to systems and methods for accessing and viewing multimedia content. More specifically, embodiments relate to a method of assisting a user in the search of contents using a content delivery application based on user search habits, to a device for implementing the method, to a communicating apparatus such as a set-top box comprising said device, and to a computer program adapted to implement the method.

### Related Art

The approaches described in this section could be pursued, but are not necessarily approaches that have been previously conceived or pursued. Therefore, unless otherwise indicated herein, the approaches described in this section are not prior art to the claims in this application and are not admitted to be prior art by inclusion in this section.

Apparatuses for retrieving and playing multimedia contents, e.g., a set-top box also known as video decoder, or a smart TV, have long exceeded their basic capacity of playing broadcasted TV programs. Nowadays, a set-top box allows viewing a large variety of multimedia contents of various kinds including, inter alia, programs in replay, video-on-demand (VoD), TV commerce (T-commerce) and Internet Protocol TV (IPTV). Such contents can be retrieved, e.g., via the Internet from information servers accessible through content delivery platforms such as, for instance, Youtube, MyCanal, Netflix, etc. These platforms are accessed through content delivery applications which can be run on the set-top box.

Typical use cases include the launch by a user of a search for same programs at a specific day of the week and/or at a specific time of the day, such as daily weather forecast or news bulletin, cartoons, serial programs in replay mode, etc. More specifically, many users carry out the same search for contents on a regular, e.g., daily or weekly basis, that is to say using the same content delivery application at approximately the same moment in the day and/or on the same day in the week.

There is thus a need for assisting a user of a set-top box in the search of contents to be retrieved from at least one content information server using a content delivery application which can be run on the set-top box, in particular within the context of such use cases as those presented in the above.

### SUMMARY

Some embodiments relate to a method of retrieving content using a content delivery application, the method comprising:
- storing a record in a memory, comprising a search text in association with an application identifier which identifies the content delivery application used for searching said search text, and/or a timestamp which reflects a time of the search;
- upon launch of a given content delivery application at a given time of a day, looking-up in the memory for a matching record having the application identifier of said launched content delivery application, and having a matching timestamp; and,
- on condition that a matching record is identified, proposing to perform a search for the search text of the matching record.

Some embodiments relate to a device for retrieving contents using a content delivery application which can be run on an apparatus, the device comprising:
- means for storing a record, in a memory, comprising a search text in association with an application identifier which identifies the content delivery application used for searching said text, and/or a timestamp which reflects a time of the search;
- a processing unit adapted to look-up in the memory, upon launch of a given content delivery application at a given time of a day, for a matching record having the application identifier of said launched content delivery application, and having a matching timestamp; and,
- a human-to-machine interface through which, on condition that a matching record is identified, performance of a search for the search text of the matching record is proposed.

Some embodiments relate to a communicating apparatus for retrieving and playing contents, for instance a set-top box, comprising the device as defined above.

Some embodiments relate to a computer program product comprising one or more stored sequences of instructions that are accessible to a processor and which, when executed by the processor, cause the processor to carry out the steps of the method as defined above.

### BRIEF DESCRIPTION OF THE DRAWINGS

Embodiments are illustrated by way of example, and not by way of limitation, in the figures of the accompanying drawings, in which like reference numerals refer to similar elements and in which:
- Figure 1 is a schematic view of an apparatus implementing embodiments as proposed herein;
- Figure 2 is a flow chart illustrating steps of the learning phase of a method according to embodiments;
- Figure 3 is an exemplary file structure of a record and a search scheme stored in the apparatus of Figure 1;
- Figure 4 is a flow chart illustrating additional steps of the learning phase of Figure 2;
- Figure 5 is a flow chart illustrating steps of a search phase of a method according to embodiments; and
- Figure 6 is an exemplary pop-up menu displayed during an implementation of the search phase of the method as illustrated in Figure 5.

The same reference number represents the same element or the same type of element on all drawings, unless stated otherwise.

### DESCRIPTION OF PREFERRED EMBODIMENTS

The figures and the following description illustrate specific exemplary embodiments. It will thus be appreciated that those skilled in the art will be able to devise various arrangements that, although not explicitly described or shown herein, embody the principles of the proposed solution and are included within the scope of the present disclosure. Furthermore, any examples described herein are intended to aid in understanding the principles of the proposed embodiments, and are to be construed as being without limitation to such specifically recited examples and conditions. As a result, the invention is not limited to the specific embodiments or examples described below, but by the claims and their equivalents.

In the following description, well-known functions or constructions by the one skilled in the art are not described in detail since they would obscure the description of embodiments in unnecessary detail.

As used herein, "multimedia content" or simply "content" may be defined to include any type of program content, including any type of audio, video, and/or image data received from any source. For example, "content" may include Internet content, streaming services (e.g., YouTube, MyCanal, Netflix, M-Go, Hulu, Amazon, etc.), recorded video content, video-on-demand (VOD) content, broadcasted content, television content, television programs, advertisements, commercials, music, movies, video clips, interactive games, computer games, network-based entertainment applications, 3-D objects, and other media assets. Media assets may include any and all kinds of digital media formats, such as audio files, image files or video files.

In addition, an "apparatus" may be defined to include any communicating device adapted to and suitable for retrieving, decoding and playing multimedia contents, including for instance a communicating media player, a smart TV, a Blu-Ray player, a digital set top box, a video game system, a computer, a tablet, a smartphone, etc. Embodiments shall be described in what follows having a set-top box in mind, but the one with ordinary skills in the art will appreciate that the teachings of the invention encompass any other type of communicating apparatus as defined above.

In order to support assistance to the user of the set-top box, STB, in the search of contents to be retrieved from at least one content information server using one of a plurality of content delivery applications which can be run on the STB, embodiments implement a learning phase, in which records are stored in a memory of the STB, each record comprising a searched text along with a timestamp indicative of, e.g., the time of a day the text was entered by the user for searching, and further along with an identifier of the application in which the text was entered and searched. Then, in a search phase which is implemented when a content delivery application is launched, e.g. by the user via the User Interface (Ul) of the system, there is checked whether one or more records are stored, having the same application identifier and a matching timestamp. If one or more records match these criteria, then at least a selection of the corresponding search texts can be presented to the user and the user may validate the launch of a search for one of these texts. Thus, a search for this text can be launched using the content delivery application. User experience is enhanced since the user does not need to enter the text he wants to be searched. Whereas a plurality of varied content delivery applications can be run on the STB, and whereas numerous contents may be of varying interest to the user depending on the time of the day, the user is offered a shortcut for searching for any specific contents, at any specific time of the day, and using any specific content delivery application. In other words, the user is assisted based on his search experience, stemming from his use of the STB for retrieving contents on a somehow regular basis. The only thing which the user has to do is to launch execution of any one of the supported content delivery applications, through which he intends to retrieve an expected content.

These and other aspects of the present disclosure will now be described in more details, with respect to non-limiting embodiments.

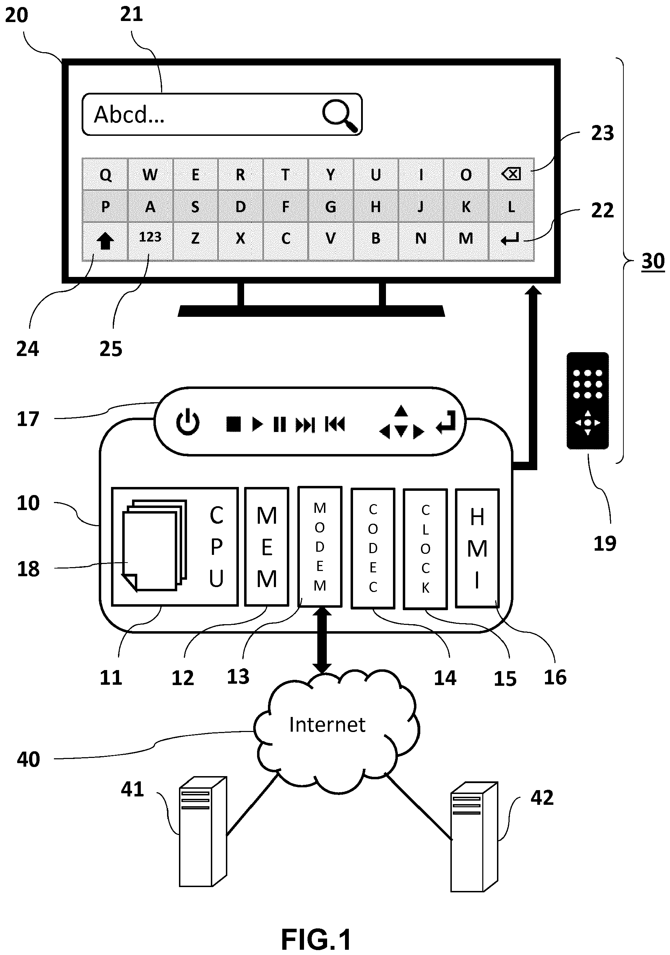

Referring to **Figure 1**, there is shown therein a schematic view of an exemplary communicating apparatus for retrieving and playing multimedia contents.

In the example as shown, the apparatus is for example a set-top box 10 capable of retrieving content information, and of processing said content information for generating decompressed and decoded video and/or audio information. The set-top box 10 can be coupled to a display device 20, having a display screen for displaying the video information and further having loudspeakers for restoring the audio information to a user. In the example as shown, a TV set is employed as an example display device. In addition, the apparatus can comprise a remote control 19, which is adapted to be used in combination with the display device 20 as an example User Interface (UI) 30 for the set-top box. It is to be understood, however, that embodiments are not limited to these examples, and extension to other types of apparatuses for retrieving and playing multimedia contents, display devices and user Interfaces can be achieved by one skilled in the art without departing from the scope of the invention. For instance, features of the set-top box and the display device can be implemented as a smart TV. Also, the User Interface 30 may include a front panel 17 of the set-top box 10, as shown in Figure 1, in lieu of or in addition to the remote control 19. It can also include a front panel of the TV set 20. In addition, the display device 20 can be any type of user device such as a laptop computer, a tablet, or a smartphone, for instance.

In the shown example, the set-top box 10 comprises a central processing unit 11, a system memory 12 with a read-only memory (ROM) and a random-access-memory (RAM), at least one modem 13, a codec 14, a local clock module 15, a human-to-machine interface (HMI) module 16, and the front panel 17. Central processing unit 11 may include one or more microprocessors or microcontrollers. System memory 12 comprises a read-only memory (ROM) and a random-access-memory (RAM), including volatile RAM such as SDRAM and non-volatile RAM (NVRAM) such as a Flash memory.

The set-top box 10 may receive contents from one or more sources. In the shown example, the set-top box 10 is connected to the Internet 40, through the modem 13, for retrieving content from remote content information servers 41 and 42. In variants, the contents may be transmitted via any other communication medium including via broadcast (e.g., television and/or radio), wireless communications (using 4G or 5G mobile communication networks, according to standards of the 3GPP consortium), cable, satellite broadcasting, etc.

The central processing unit 11 is adapted to run one of a plurality of content delivery applications 18, which can either be loaded from the ROM of the system memory 12 or be executed from a software as a service (SaaS) which can be accessed from the Internet 40, for instance. These applications are adapted to allow retrieving contents from the distant information servers 41 and 42. The multimedia content data thus retrieved by the set-top box 10 from the distant information servers 41 and 42 may comprise compressed/encoded data, based on one or more of the MPEG standards, for instance. This data can be decompressed and decoded by codec 14 to obtain decoded data, e.g. video and/or audio data streams ready for display and audio rendering, respectively.

The set-top box 10 can be connected to the TV set 20 in the same way as a VCR, using a Scart socket, for example, or an HDMI socket, for transmitting video and audio signals to be displayed and restored, respectively, by the TV set 20.

The clock module 15 is adapted, in particular, to generate timestamps associated with user interactions which are performed by the user through the user interface 30.

The HMI module 16 is adapted to control the operation of the front panel 17 and/or the remote control 19 for receiving input commands from the user. It is further adapted to manage the display of a virtual keyboard with one or more screens (e.g., one screen for displaying a set of lower-case letters, another screen for displaying a set of upper-case letters, and still another screen for numbers and/or "special" characters). More generally, the HMI module 16 manages the input and output user interactions, which includes the reception of input commands through the control panel 17 and/or the remote control 19, and the associated display of various menus, text input areas, control buttons, etc., in the form of e.g. pop-up windows or on-screen-display (OSD) displayed on the screen of the TV set 20.

In the example as shown in Figure 1, the HMI module 16 controls the display on the screen of the TV set 20 of a text input area 21 in which a search text being edited can be viewed, and the display of a virtual keyboard. In this example, the virtual keyboard includes virtual keys for all the upper-case letters, a virtual "OK" key or button 22, a virtual "delete" key or button 23, and virtual keys 24 and 25 for accessing a set of lower-case letters and a set of numbers and "special" characters, respectively. The user navigates through the menus, the virtual keyboard and the text entry zone 21 by using the direction arrows of the remote control, and/or of the front panel 17.

Exemplary embodiments of the proposed method of assisting a user of the above apparatus 10, when searching for contents to be retrieved from the Internet using one of the content delivery applications 18 which is being run by the central processing unit 11, shall now be described

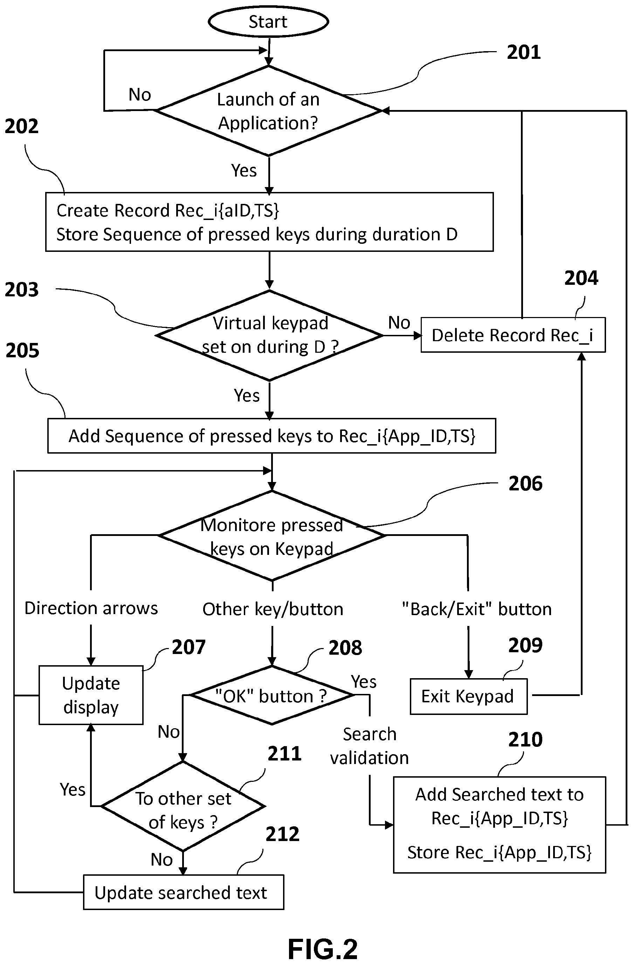

The flow chart of **Figure 2** relates to an embodiment of a learning phase of the method of the present disclosure. The learning phase is aimed at acquiring user search habits thanks to a background process which is executed continuously. Unless it is specifically mentioned to the contrary, each step of the process as shown in Figure 2 is carried out by the central processing unit 11 of the set-top box 10.

The process starts, for instance, when a user turns on the set-top-box 10 and/or the TV set 20.

Step 201 consists in waiting until the execution of one of the content delivery applications 18 is launched, responsive to an interaction by the user. Such interaction may be, for instance, the selection of said application in a menu through the user interface 30. The application is then run by the central processing unit 11 of the set-top box 10.

At 202, a record *Rec_i* is created in the volatile RAM of system memory 12. Said record comprises an identifier *aID* of the content delivery application as launched, and a timestamp *TS* reflecting the time said application has been launched. This timestamp can be provided by the clock module 15 of the set-top box 10. In one example, the timestamp TS may reflect the absolute time, namely the time of an atomic clock with which the local clock is synchronized. In a variant, it may reflect the time in the week or time in the day, of the moment when the application has been launched.

In parallel, the sequence of keys of the user interface 30 which are pressed on the front panel 17 and/or the remote control 19, if any, is stored for instance in the volatile RAM of the system memory 12, at least during a given duration *D* of, e.g., one minute or a few minutes.

If, at 203, it is determined that the virtual keypad of the user interface 30 has not been set by the user through corresponding interaction with the front panel 17 and/or the remote control 19, then it is determined that the user does not intend to type a text to be searched in order to retrieve a desired content. The user may indeed choose to select a content (namely a content to be retrieved and played) by another means, for instance by selecting the content in an Electronic Program Guide (EPG), or by direct selection of a predefined channel, via corresponding features of the running content delivery application. Therefore, the record *Rec_i* is deleted from the volatile RAM at 204. And the process proceeds back to step 201, to wait until the same or another content delivery application is launched, in turn.

Else, that is if the virtual keypad of the user interface 30 has been set by the user within the duration D, it is determined that the user intends to type a text to be searched in order to retrieve a desired content. In that case, the sequence of the keys which have been pressed since the application has been launched is added to the record *Rec_i.* This sequence is referred to as *KB_Seq* in what follows.

Then, at 206, there is monitored which keys are pressed on the virtual keypad and/or which buttons are pressed on the front panel 17 or the remote control 19. If, for instance, direction arrows are pressed, then the display is updated at 207. If the Back/Exit button 23 of the virtual keypad is pressed, meaning that the user wants to exit the search feature, then the virtual keypad is cancelled at 209 and the process proceeds back to 204 so that the outstanding record *Rec_i* is deleted.

Any other keys of the virtual keypad being pressed by the user lead to add, at 212, the corresponding characters to the text being typed and which is simultaneously depicted in the text area 21. This process continues until, at 208, it is determined that the user has pressed the "OK" button 22. This is interpreted as the validation of the search for the text which has been entered to that point in time, and which is currently depicted in the text area 21. Thus, at 210, this text is added to the record *Rec_i* as the searched text *Text* associated to this new record. Said record is stored in the non-volatile RAM of central memory 12 of the set-top box 10. The process then loops to step 201.

Another user interaction can be the pressing of any one of keys 24 and 25 at 211 before pressing of the "OK" key/button. Then, the process proceeds to step 207 so as to update the display and let the set of lower-case characters or the set of numbers and "special characters", respectively, appear on the screen of the TV set in lieu of the set of upper-case characters as shown in Figure 1.

To summarize, the learning phase of the method according to embodiments, consist in learning user search habits by identifying and storing records, in the non-volatile RAM of the system memory 12 of the set-top box 10, each comprising a search text *TEXT* in association with an application identifier *aID* which identifies that one of the content delivery applications 18 which has been specifically used for searching said text, and with a timestamp TS which reflects the specific time when said text has been searched. In one embodiment, the record *Rec_i* further comprises, the sequence *KB_Seq* of keys/buttons which have been pressed to reach the point where the text to be searched could be entered and the corresponding search could be launched by pressing the "OK" key/button, at 208. Stated otherwise, the learning phase of the method comprises tracking user interactions with the set-top box for entering a text to be searched by using a given content delivery application. Further, storing a record further comprises storing a sequence of user interactions which has led to the entry of the text to be searched using said content delivery application.

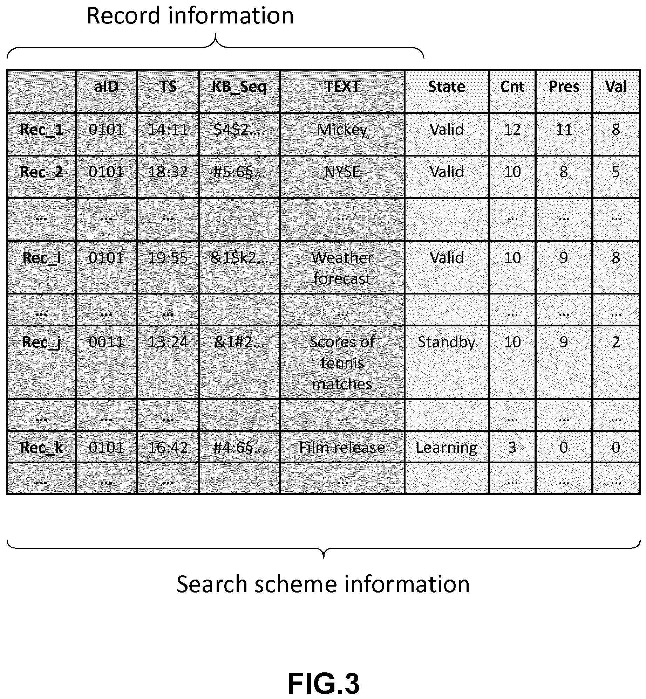

**Figure 3** shows an exemplary file structure for storing the records *Rec_i* in the non-volatile RAM of the system memory. In this figure, each record is diagrammatically represented by an entry of a table, more specifically a line of said table. Each column of the table represents one item (or element, or component) of the record information for record *Rec_i,* namely the application identifier *aID*, the timestamp *TS*, the sequence *KB_Seq* of the keys which have been entered by the user to arrive at the searched text, and the searched text *TEXT.* This text portion of any record is the main element of the record, that-is-to-say the element which the method aims at suggesting to the user when he will later launch another instance of the same content delivery application as identified by the stored identifier *aID*, and at a timestamp matching with the stored timestamps *TS*. The user may thus validate the suggested text to cause a search for said text to be launched using the application specifically, without the need to type this text again. Obviously, the experience of the user will be enhanced if the suggested text is consistent with the user search habits.

Now, the one skilled in the art will appreciate that it may not be sufficient to have one piece of record information as represented by each line of the file structure of Figure 3 for determining user search habits. It is preferable that more than one occurrence of any record shall have been identified before concluding that the same text is likely to be regarded as a useful suggestion when the user will launch later the same content delivery application. Yet, any record of searched text is preferably stored once in the system memory 12, in order to keep memory space.

In order to account for the number of occurrences a given text has been searched by the user with the same content delivery application, embodiments of the disclosure additionally support the concept of search scheme. A search scheme comprises a search record plus additional search scheme information suitable for characterizing any stored record with respect to the user search habits. This includes characterizing the level of frequency and the regularity of the time in the day the user has searched for that text beforehand.

The additional information can comprise one or more of a state value *State,* a record counter value *Cnt,* a presentation counter value *Pres,* and a validation counter value *Val.* The *State* item can take any one of at least two values, namely *Learning* and *Valid.* In some embodiments, it can take another value, namely *Stand-by.* Significance of these values will become apparent from the description which follows.

The record counter value Cnt of a stored record *Rec_i* reflects the number of times the text of the record has been typed and searched by the user. In some embodiments, indeed, the learning phase further comprises incrementing the record counter value *Cnt* associated with a matching record *Rec_i* each time the text in this readily stored record is searched using the same content delivery application, at approximately the same time of the day. A search performed "at approximately the same time of the day" as a prior search can be defined as a search performed at a time of the day which falls within a given time interval of e.g. ± *n* minutes around the time of the day when said prior search has been performed.

A matching record is a stored record having the application identifier *aID* of the currently running content delivery application and having a matching timestamp. For the purpose of looking-up in the system memory for matching records within the stored records, a matching timestamp of a stored record can be a timestamp which falls within a given time interval of e.g. ± *m* minutes around the time of the day when the content delivery application currently running has been launched. In order to provide the user with search suggestions of potential interest, the automatic launch of a search for the text of the matching record *Rec_i* is presented to the user only if the count value *Cnt* of the record is above a given threshold *S*. For example, this can be reflected by the state of the record having the *Valid* value. On the contrary, a stored record *Rec_i* whose counter value *Cnt* is below the threshold value S may have the state value *Learning,* meaning that it is already identified as a potential search habit, but is not yet considered as a search habit because its typing by the user for launching a search has not yet occurred a sufficiently significant number of times.

In the example of Figure 3, the threshold value *S* is equal to 5. The record *Rec_k* comprising the search text "Film release" has a count value *Cnt* lower than 5. Its state value is thus *Learning.*

In some embodiments, the presentation to the user of the automatic launch of a search for the text in a matching record *Rec_i* comprises incrementing a presentation counter *Pres* associated to said record *Rec_i.* The presentation counter value *Pres* of a stored record *Rec_i* is representative of the number of times the text of the record has been suggested to the user for an automatic launch of a search, according to the search assistance featured by an embodiment of the disclosure.

The validation counter value *Val* of a stored record *Rec_i* is representative of the number of times the text of the record has been presented to the user and the user has validated the search suggestion. In some embodiments, the learning phase further comprises incrementing the validation counter value *Val* associated with a matching record only in case of validation by the user of the automatic launch of a search for the text of the matching record *Rec_i* that has been presented to and validated by the user.

In one embodiment, a record may not be presented to the user if the difference between the presentation counter value *Pres* and the validation counter value *Val* associated with said record is above a given threshold N. In this case, the state value is set to *Stand-by.*

In the example of Figure 3, the threshold value *N* is equal to 4. The records *Rec_1, Rec_2* and *Rec_i* have presentation counter values *Pres* and validation counter values *Val* such that the difference between these values are lower than 4. The state value of these records is thus *Valid.* By contrast, the difference between the presentation counter value *Pres* and the validation counter value *Val* of the record *Rec_j* is greater than 4. The state value of the record *Rec_j* is thus *Standby.*

When the state value of a record is set to *Stand-by* because the difference between the presentation counter value *Pres* and the validation counter value *Val* of the record *Rec_j* becomes greater than N, the count value *Cnt* of this record can be reset to zero, and then be allowed to be incremented again upon execution of searches for the same text being launched by the user at additional iterations of the learning phase. Then, when the value *Cnt* exceeds a given threshold value, for instance the same threshold value *S* as mentioned in the above or even a lower value such as X% of *S* where X is a percentage between 1% and 99% (for instance 25%, 50% or 75%), the record status can be set back to *Valid.* On the contrary, if the state of the record remains *Stand-by* during a given time (for instance during 7, 15, or 30 days), then the record can be erased from the system memory.

In a variant, a stored record shall be erased from the system memory of the set-top box if the difference between the presentation counter *Pres* and the validation counter value *Val* associated to said record is above the threshold N.

In both embodiments, the situation reflected by the relative levels of values *Pres* and *Val,* respectively, can be interpreted as the fact that the user has lost interest in searching the text of that record, at least using the same application and/or at the same time in the day.

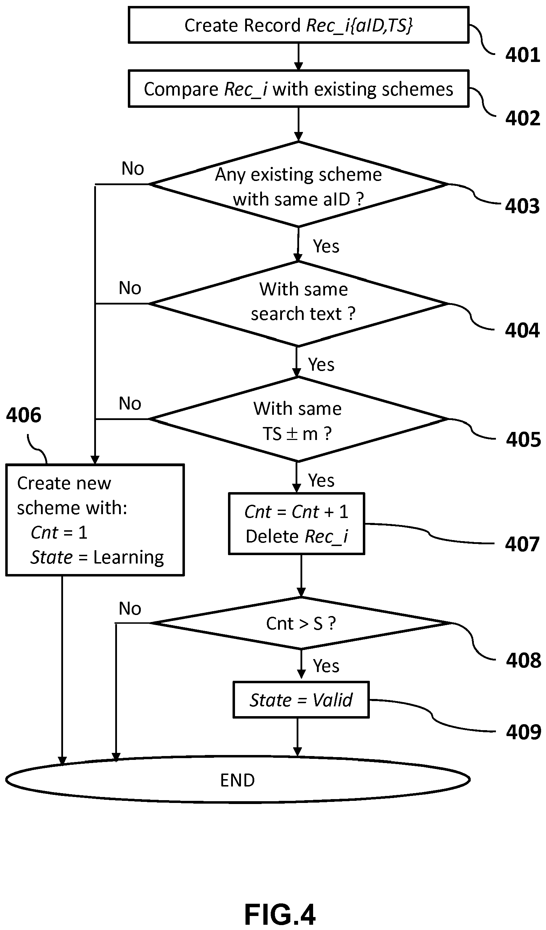

Additional features of the learning phase, which are tied to the management of the search scheme information added to the record information of any corresponding record stored in the non-volatile RAM of the system memory 12 according to the file structure as shown in Figure 3, shall now be described with reference to the flow chart of **Figure 4**.

It is recalled that steps of the learning phase are implemented as a background task running continuously on the set-top box once it has been powered-on. Thus, the features of the learning phase which are tied to the management of the record information and which have been presented above with reference to Figure 1, as well as the additional features of the learning phase of the method which are tied to the management of additional search scheme information for any stored record and which will now be described with reference to the flow chart of **Figure 4**, are carried out each time the user launches execution of any one of the supported content delivery applications 18.

As stated in the paragraph just above, the management of the additional search scheme information for any record *Rec_i,* also starts when the user launches execution of a content delivery application having an identifier *aID*, at a time which is reflected by a timestamp *TS*. Thus, the process of Figure 4 starts with the creation in the volatile RAM of the system memory 12, at 401, of a record *Rec_i* having said application identifier *aID* and said timestamp *TS*.

At 402, the record *Rec_i* is compared with those of existing search schemes readily stored in the non-volatile RAM of the system memory 12. If it is determined at 403 that a search scheme exists that has the same application identifier *aID*, and if it is determined at 404 that said scheme has the same search text *TEXT,* and if it is determined at 405 that said scheme has a matching timestamp *TS* (a matching timestamp being defined as was already explicated in the above), then the counter value *Cnt* of said scheme is incremented at 407. In addition, the record *Rec_i* is deleted from the volatile RAM of the system memory 12, since such record is useless, being already stored in the non-volatile RAM as part of the search scheme under consideration. Else, if any of the tests performed at 403, 404 and 405 provides a negative result, then it means that the record *Rec_i* does not already exist in the non-volatile RAM of the system memory 12. Therefore, a new scheme is created with said record *Rec_i,* and with a counter value *Cnt* set to unity, and further with a state value set to *Learning.*

Each time a counter value *Cnt* of a search scheme has been incremented, as in step 407, said counter value *Cnt* can be compared with the threshold *S*, at 408. If the counter value *Cnt* exceeds the threshold S, then at 409 the state value is changed from *Learning* to *Valid.* As a result, the text of the record is made available for the presentation to the user for an automatic launch of a search for that text.

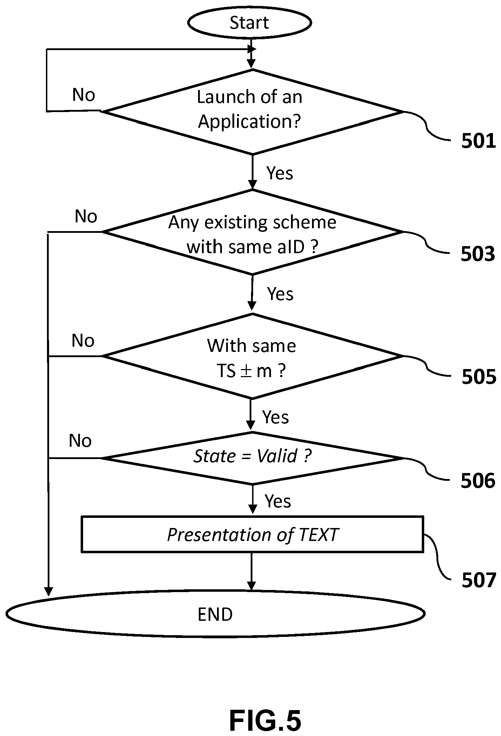

With reference to the flow chart of **Figure 5**, the search phase of the method according to embodiments of the invention starts at 501 when the user launches execution of any one of the supported content delivery applications 18.

At 503, it is then determined whether a record *Rec_i* is readily stored in the non-volatile RAM of the system memory 12, which corresponds to a prior search which has been executed for the launched application. Such determination is based on the application identifier *aID* and on the timestamp *TS* of said new record *Rec_i.*

If a record has been already stored, then it is determined at 505 whether the stored record *Rec_i* has been stamped at the same similar time as the current time of the day, that is to say whether the timestamp TS of the stored record *Rec_i* and the current time of the day do not differ one from the other by a given time *m* (namely that the current time of the day is comprised in a range between *TS-m and TS+m).*

If this is the case, then the record *Rec_i* being considered qualifies as a matching record, and at 506 it is assessed whether the stored record has *Valid* as state value.

If so, then at 507 the text *TEXT* of the record *Rec_i* is presented, for validation by the user, as a suggestion for launching a search using the running content delivery application.

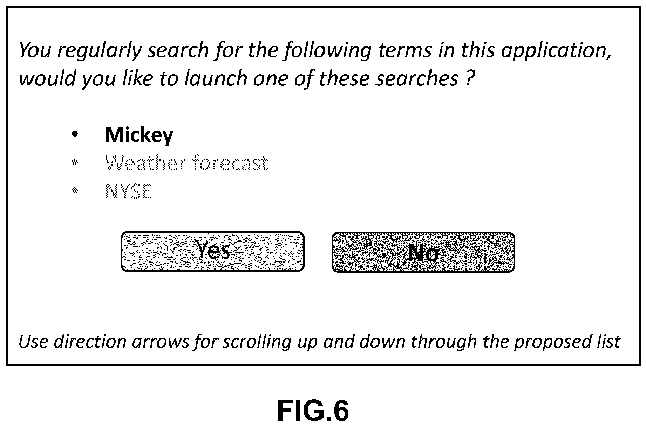

Such presentation can take the form of the popup window shown on **Figure 6**, which can be displayed on the screen of the TV set 20.

In some embodiments, when there is a plurality of matching records in the non-volatile RAM of the system memory 12, the presentation to the user comprises presenting to the user the search texts of, at most, a given number P of matching records, respectively, which are selected among the plurality of matching records. In the shown example, three texts are suggested to the user for validation: "Mickey", "Weather forecast" and "NYSE". The method thus proposes to the user to perform one or more of searches associated with the matching records including these texts.

In some embodiments, the selection of the matching records which are to be presented is based on the count values *Cnt* of the record counters respectively associated with the plurality of matching records. More specifically, the matching records which are selected can be the matching records having the highest count values, respectively. Additionally, the selected texts can be presented in the order of their respective count values, as in the shown example. The presentation counter value *Pres* is incremented in each of the schemes which correspond to the texts selected for presentation and thus presented.

Eventually, the user is only requested to validate the text or any one of the plurality of texts proposed for search by selecting that text with the direction arrows and then by ticking the "Yes" button. This validates the automatic launch of a search for the selected one of the presented texts, using the content delivery application associated with the relevant record/scheme. The validation counter value *Val* is incremented for the corresponding search scheme stored in the non-volatile RAM of the system memory 12.

Advantageously, launching the search for the text *TEXT* of the matching record can be implemented by the set-top box by playing back the sequence of user interactions *KB_Seq* which has led to the entry of the text searched using said associated content delivery application, and further the sequence of keys which has led to the typing of the text *TEXT* as stored in the search scheme. As the set-top box knows the structure of the user interface 30, this can be achieved based solely on the record information *KB_Seq* and *TEXT* which can be read in the non-volatile RAM of the system memory 12.

The one skilled in the art will appreciate that there has been disclosed a method of aiding, namely for assisting a user, in the use of a communicating apparatus 10 for retrieving and possibly playing contents, in the search of contents to be retrieved from at least one content information server 41,42 using one of a plurality of content delivery applications 18 which can be run on the apparatus.

The method can comprise one or more of the following:
- learning user search habits by identifying and storing records *Rec_i,* in a system memory 12 of the apparatus, each comprising a search text *TEXT* in association with an application identifier *aID* which identifies the content delivery application specifically used for searching said text, and with a timestamp *TS* which reflects the specific time when said text has been searched;
- upon launch of a given content delivery application at a given time of a day, looking-up in the system memory of the apparatus for at least one matching record within the stored records, a matching record having the application identifier of said launched content delivery application, and having a matching timestamp; and, such being the case,
- presenting (for instance by way of a pop-up window as shown in Figure 6), for validation by the user, the launch of a search for the search text of the matching record whereby, responsive to the validation of the search by the user, a search is automatically launched for said text using the content delivery application.

Further, embodiments encompass a communicating apparatus 10 for retrieving and possibly playing contents, in the search of contents to be retrieved from at least one content information server 41,42 using one of a plurality of content delivery applications 18 which can be run on the apparatus.

The apparatus can comprise one or more of the following:
- means for learning user search habits by identifying and storing records *Rec_i,* in a system memory 12 of the apparatus, each comprising a search text *TEXT* in association with an application identifier *aID* which identifies the content delivery application specifically used for searching said text, and with a timestamp *TS* which reflects the specific time when said text has been searched;
- means for looking-up in the system memory of the apparatus, upon launch of a given content delivery application at a given time of a day, for at least one matching record within the stored records, a matching record having the application identifier of said launched content delivery application, and having a matching timestamp;
- means for presenting (for instance by way of a pop-up window as shown in Figure 6), for validation by the user, the launch of a search for the search text of the matching record; and,
- means for automatically launching a search for said text using the content delivery application, responsive to the validation of the search by the user.

In some embodiments, the means for learning search habits can further comprise means for incrementing a record counter *Cnt* associated with the record each time the text in the record is searched using the same content delivery application at approximately the same time of the day, and wherein the automatic launch of a search for the text in a matching record is presented to the user if the count value of the corresponding record counter is above an associated threshold *S*.

In other embodiments, the means for presenting can further be adapted to present, in case of a plurality of matching records, the automatic launch of a given number P of searches for the texts in, at most, a given number of matching records, respectively, which are selected among the plurality of matching records.

Embodiments can also be embedded in a computer program product, which comprises all the features enabling the implementation of the methods described herein, and which - when loaded in an information processing system - is able to carry out these methods. A computer program product or a computer program means, in the present context, any expression, in any language, code or notation, of a set of instructions intended to cause a system having an information processing capability to perform a particular function either directly or after conversion to another language. Such a computer program can be stored on a computer or machine-readable medium allowing data, instructions, messages or message packets, and other machine-readable information to be read from the medium. The computer or machine-readable medium may include non-volatile memory, such as ROM, Flash memory, Disk drive memory, CD-ROM, and other permanent storage. Additionally, a computer or machine-readable medium may include, for example, volatile storage such as RAM, buffers, cache memory, and network circuits. Furthermore, the computer or machine-readable medium may be a tangible medium which comprises computer or machine-readable information in a non-transitory state, that allow a device to read such computer or machine-readable information.

Expressions such as "comprise", "include", "incorporate", "contain", "is" and "have" are to be construed in a non-exclusive manner when interpreting the description and its associated claims, namely construed to allow for other items or components which are not explicitly defined also to be present. Reference to the singular is also to be construed to be a reference to the plural and vice versa.

While there has been illustrated and described what are presently considered to be the preferred embodiments of the present invention, it will be understood by those skilled in the art that various other modifications may be made, and equivalents may be substituted, without departing from the true scope of the present invention. Additionally, many modifications may be made to adapt a particular situation to the teachings of the present invention without departing from the central inventive concept described herein. Furthermore, an embodiment of the present invention may not include all of the features described above. Therefore, it is intended that the present invention not be limited to the particular embodiments disclosed, but that the invention include all embodiments falling within the scope of the appended claims.

A person skilled in the art will readily appreciate that various parameters disclosed in the description may be modified and that various embodiments disclosed and/or claimed may be combined without departing from the scope of the invention.

It is stipulated that the reference signs in the claims do not limit the scope of the claims, but are merely inserted to enhance the legibility of the claims.

## Claims

1. A method of retrieving contents using a content delivery application (18), the method comprising:
- storing a record (*Rec_i*), in a memory (12) comprising a search text (*TEXT*) in association with an application identifier (*aID*) which identifies the content delivery application, and/or a timestamp (*TS*) which reflects a time of the search;
- upon launch of a given content delivery application at a given time of a day, looking-up in the memory for a matching record having the application identifier of said launched content delivery application, and having a matching timestamp; and,
- on condition that a matching record is identified, proposing to perform a search for the search text of the matching record.

2. The method according to claim 1, wherein the method further comprises incrementing a record counter (*Cnt*) associated with the record whenever the search text of the record is searched using the same content delivery application at approximately the same time of the day, and wherein the proposal to perform the search text in the matching record is made on condition that the count of the record counter is above a threshold (*S*).

3. The method according to claim 1 or 2, wherein, in case that a plurality of matching records is identified, the method comprises proposing to perform one or more of searches associated with one or more matching records.

4. The method of claims 2 and 3, wherein the one or more matching records are matching records selected from the plurality of matching records having the highest count values.

5. The method according to any one of the preceding claims, further comprising incrementing a presentation counter (*Pres*) associated with a matching record whenever a search for the search text of the matching record is proposed, and/or further comprising incrementing a validation counter (*Val*) associated with a matching record whenever a search for the search text of said matching record is performed.

6. The method of claim 5, wherein a record is made unavailable (*Stand-by*) for a search if the difference between the presentation counter (*Pres*) and the validation counter (Val) associated with said record is above a given threshold (*N*).

7. The method of claim 5 or 6, wherein a record is erased from the memory if the difference between the presentation counter and the validation counter associated with said record is above a given threshold (*N*).

8. The method of any one of the preceding claims, wherein a matching timestamp of a stored record is a timestamp which falls within a given time interval (*m*) around the time of the day when the content delivery application is launched.

9. The method of any one of the preceding claims, further comprising tracking user interactions for entering a text to be searched by using a content delivery application, and wherein storing a record further comprises storing a sequence of user interactions (*KB_Seq*) which has led to the entry of the search text of said record using said associated content delivery application.

10. The method of Claim 5, itself depending on Claim 2, wherein a record is stored in a non-volatile RAM of the memory along with at least one of the following additional information associated with the record: a state value (*State*), the record counter value (*Cnt*), the presentation counter value (*Pres*) and the validation counter value (*Val*), wherein the state value reflects whether the record counter value exceeds a threshold (*S*).

11. A device for retrieving contents using a content delivery application (18) which can be run on an apparatus, the device comprising:
- a memory (12) adapted to store a record (*Rec_i*) comprising a search text (*TEXT*) in association with an application identifier (*aID*) which identifies the content delivery application used for searching said text, and/or a timestamp (*TS*) which reflects a time of the search;
- a processing unit (11) adapted to look-up in the memory, upon launch of a given content delivery application at a given time of a day, for a matching record having the application identifier of said launched content delivery application, and having a matching timestamp; and,
- a human-to-machine interface (16) through which performance of a search for the search text of the matching record is proposed.

12. The device of claim 11, wherein the stored record further comprises an associated record counter (*Cnt*) whenever the search text of the record is searched using the same content delivery application at approximately the same time of the day, and wherein performance of a search for the search text of the matching record is proposed on the condition that the count of the record counter is above a threshold (*S*).

13. The device of claim 11 or 12 wherein, in case that a plurality of matching records is identified, the human-to-machine interface is further adapted to propose performance of a one or more searches for search texts of one or more matching records.

14. A communicating apparatus (10) for retrieving and playing contents, comprising means for aiding in the search of contents to be retrieved from at least one content information server (41,42) using one of a plurality of content delivery applications (18) which can be run on the apparatus, said means for aiding comprising:
- means for learning search habits by identifying and storing records (*Rec_i*), in a system memory (12) of the apparatus, each comprising a search text (*TEXT*) in association with an application identifier (*aID*) which identifies the content delivery application specifically used for searching said text, and with a timestamp (*TS*) which reflects the specific time when said text has been searched;
- means for looking-up in the system memory of the apparatus, upon launch of a given content delivery application at a given time in a day, for at least one matching record within the stored records, a matching record having the application identifier of said launched content delivery application, and having a matching timestamp; and,
- means for presenting (Figure 6), for validation, the launch of a search for the text in the matching record; and,
- means for automatically launching a search for said text using the content delivery application, responsive to the validation of the search.

15. A computer program product comprising one or more stored sequences of instructions that are accessible to a processor and which, when executed by the processor, cause the processor to perform the steps of any one of Claims 1 to 10.
